# FASCICULE DE BREVET EUROPEEN

(11) **EP 3 548 223 B1**
(45) Date de publication et mention de la délivrance du brevet: **14.07.2021**
(21) Numéro de dépôt: 17812022.6
(22) Date de dépôt: 22.11.2017
(51) Int. Cl.: B24C 1/06, B24C 1/04, B24C 11/00, B24C 7/00, B24C 9/00, C03C 19/00, C03C 15/00

(54) **PROCÉDÉ ET INSTALLATION DE DÉPOLISSAGE DE RÉCIPIENT EN VERRE**
VERFAHREN UND VORRICHTUNG ZUM MATTGLASIEREN EINES GLASBEHÄLTERS
PROCESS AND FACILITY FOR FROSTING A GLASS CONTAINER

(30) Priorité: 01.12.2016 FR 1661797
(43) Date de publication de la demande: 09.10.2019
(73) Titulaire: SA Gerard Pariche, 80220 Bouillancourt-en-Sery (FR)
(72) Inventeur: DOUVILLE, Bruno, 76340 Blangy-sur-Bresle (FR)
(74) Mandataire: Fédit-Loriot
(86) Numéro de dépôt international: PCT/FR2017/053215
(87) Numéro de publication internationale: WO 2018/100270

(56) Documents cités:
- EP-A1- 0 374 291
- EP-A1- 1 236 696
- EP-A1- 1 818 317
- WO-A1-95/14552
- WO-A1-2009/026648
- WO-A1-2012/162446
- WO-A1-2013/017739
- US-A- 4 035 962
- US-A1- 2015 225 283

## Description

La présente invention se rapporte à un procédé de dépolissage de récipient en verre selon le préambule de la revendication 1, connu du document WO 9514552 A1, et une installation de dépolissage de récipient en verre selon le préambule de la revendication 6, aussi connue du document WO 9514552 A1.

Un domaine d'application envisagé est notamment, mais non exclusivement, celui de la parfumerie dans lequel la surface externe des flacons peut être dépolie à dessein de décoration.

Le dépolissage d'une paroi de verre consiste à produire une multitude de micro-aspérités à la surface de la paroi, lesquelles produisent alors de multiples réfractions anisotropes de la lumière et partant, rendent cette paroi translucide.

Ce dépolissage est réalisé, pour les récipients en verre, par attaque chimique de leur paroi externe. On immerge ainsi ces récipients, durant un temps donné, dans un bain contenant des ions fluorure, lesquels sont aptes à réagir avec le silicium du verre.

Usuellement, on associe le bifluorure d'ammonium, sous forme pulvérulente, à de l'acide chlorhydrique pour pouvoir obtenir une solution visqueuse contenant les fluorures.

Ces composés sont bien évidemment extrêmement toxiques et ils nécessitent non seulement de préserver les personnels qui les manipulent mais aussi, de prévoir des installations de traitement adaptées et par conséquent, coûteuses.

Usuellement, les récipients en verre sont immergés dans divers bains successifs afin d'obtenir le dépolissage. Le premier bain est un bain de décapage et il contient essentiellement de l'acide chlorhydrique auquel est déjà mélangé de l'acide fluorhydrique. Ce premier bain vise essentiellement à dissoudre les corps gras et les résidus présents à la surface externe des récipients. Après égouttage, ces récipients sont immergés dans un deuxième bain de dépolissage proprement dit. Ce deuxième bain contient essentiellement du bifluorure d'ammonium, lequel est dissous dans de l'acide chlorhydrique.

Ensuite les récipients sont rincés à l'eau pour être immergé dans un troisième bain d'acide chlorhydrique et d'eau. Puis les récipients sont à nouveau rincés à l'eau pour être finalement immergés dans un bain d'eau déminéralisée.

On obtient de la sorte des récipients présentant une surface externe parfaitement dépolie.

Toutefois, la dangerosité des composés utilisés pour ce dépolissage, et leur utilisation en grande quantité, ce qui nécessite des installations de retraitement conséquentes, constituent un fort handicap économique et environnemental.

Aussi, il a été imaginé de mettre en œuvre des solutions dépourvues d'acide fluorhydrique, à base de bifluorure de potassium associé à au moins un sel de cation multivalent hydrosoluble. On pourra notamment se référer au document EP 1 108 773 B1, lequel décrit un tel procédé.

Toutefois, celui-ci n'a pas permis de réduire significativement les coûts liés au retraitement des effluents.

Aussi, un problème qui se pose et que vise à résoudre la présente invention est de fournir un procédé de dépolissage d'une paroi de verre de façon plus économique et également plus respectueuse de l'environnement.

Dans ce but, et selon un premier aspect, il est proposé un procédé de dépolissage de récipient en verre selon la revendication 1.

Ainsi, une caractéristique de l'invention réside dans la mise en œuvre d'un procédé mécanique à sec pour dépolir la surface externe des récipients en verre et non plus en utilisant de grandes quantités d'acide chlorhydrique et d'acide fluorhydrique. Aussi, on projette une composition minérale pulvérulente aux propriétés abrasives contre la surface externe du récipient. Grâce à la vitesse d'impact des particules de la composition minérale contre la surface externe de la paroi de verre, on réalise des micro-aspérités. Ces dernières permettent alors d'obtenir des réfractions anisotropes de la lumière et partant, de rendre la paroi de verre du récipient translucide.

Selon l'invention ladite composition minérale pulvérulente abrasive comprend essentiellement une espèce minérale de formule chimique générale : X²⁺₃Y³⁺₂(SiO₄⁴⁻)₃, dans laquelle X est choisi parmi les éléments de l'ensemble des premiers éléments comprenant Ca, Fe, Mg et Mn, et dans laquelle Y est choisi parmi les éléments de l'ensemble des seconds éléments comprenant Al, Fe et Cr. Aussi, le minéral de la composition abrasive appartient à une famille de minéraux du groupe des nésosilicates cristallisant dans un système cristallin cubique. De la sorte, il est extrêmement dur et sa dureté est comprise entre 7 et 8 sur l'échelle de Mohs. Ainsi, la formule chimique de l'espèce minérale mise en œuvre associe trois premiers mêmes éléments au degré d'oxydation II, deux seconds mêmes éléments au degré d'oxydation III et trois groupements silicates. Les trois premiers mêmes éléments sont choisis parmi les cations métalliques divalents, calcium, fer, magnésium et manganèse, tandis que les deux seconds mêmes éléments sont choisis parmi les cations métalliques trivalents, aluminium, fer et chrome.

Le minéral de la composition est avantageusement extrait du sous-sol et transformé ensuite sous forme pulvérulente présentant une granulométrie déterminée.

Avantageusement, X est Fe et Y est Al. Ainsi, la formule chimique de l'espèce minérale est Fe₃Al₂(SiO₄)₃. Sa dureté est comprise entre 7,5 et 8 sur l'échelle de Mohs. La composition minérale peut comprendre des impuretés ou des traces incluant du titane, du manganèse, du magnésium ou encore du calcium. Mais elle ne contient aucuns métaux toxiques, ni de silice cristalline, laquelle présente des risques pour les opérateurs durant l'application.

Préférentiellement, le procédé selon l'invention comprend en outre une étape intermédiaire b') entre l'étape b) et l'étape c), selon laquelle on immerge ledit récipient en verre dans un bain d'acide chlorhydrique et d'acide fluorhydrique. L'acide chlorhydrique permet alors de dissoudre les graisses et les résidus à la surface externe du récipient en verre, tandis que l'acide fluorhydrique, qui a la propriété de dissoudre le verre, confère un aspect plus satiné à la surface du verre et plus doux au toucher.

Bien entendu, la mise en œuvre de ce bain d'acide chlorhydrique et d'acide fluorhydrique, est sans commune mesure en termes de quantité par rapport aux procédés traditionnels de dépolissage. Ces volumes sont de l'ordre de 15 à 20 % de ceux mis en œuvre dans les procédés traditionnels.

Selon un mode préféré de mise en œuvre, à l'étape c), on immerge ledit récipient dans un bain d'eau déminéralisée. Avantageusement, ledit récipient est auparavant asperger et rincer à l'eau courante. Également, les quantités d'eau mises en œuvre, tant courante que déminéralisée sont sans commune mesure avec celles utilisées dans les procédés de dépolissage traditionnel. On réduit ainsi la consommation d'eau courante sensiblement d'un facteur 20, et d'eau déminéralisée d'un facteur compris entre 6 et 7.

Outre l'économie réalisée, grâce au procédé objet de l'invention qui permet d'utiliser beaucoup moins de substances chimiques toxiques et d'eau, on rejette dans la nature beaucoup moins d'effluents toxiques.

Selon un mode de réalisation de l'invention particulièrement avantageux, mais non limitatif, à l'étape b), on porte ladite composition minérale pulvérulente abrasive à l'intérieur d'air comprimé à basse pression pour pouvoir projeter ladite composition minérale pulvérulente abrasive. Comme on l'expliquera plus en détail ci-après, la composition minérale pulvérulente abrasive est chargée dans un réservoir sous pression d'air, à une pression comprise par exemple entre un et deux bars. Ce réservoir est relié à une buse d'application par un conduit. Grâce a cette basse pression, la vitesse des particules abrasives est suffisamment importante pour obtenir des micro-aspérités mais également suffisamment faible pour ne pas fragiliser la paroi en verre.

Selon un second aspect, la présente invention concerne une installation de dépolissage de récipient en verre selon la revendication 6.

Partant, ladite composition minérale pulvérulente abrasive comprend essentiellement une espèce minérale de formule chimique générale : X²⁺₃Y³⁺₂(SiO₄⁴⁻)₃, dans laquelle X est choisi parmi les éléments de l'ensemble des premiers éléments comprenant Ca, Fe, Mg et Mn, et dans laquelle Y est choisi parmi les éléments de l'ensemble des seconds éléments comprenant Al, Fe et Cr. Préférentiellement, la formule chimique de l'espèce minérale est Fe₃Al₂(SiO₄)₃.

En outre, l'installation comprend, préférentiellement, un bac de réception d'acide chlorhydrique et d'acide fluorhydrique pour pouvoir immerger ledit récipient en verre à l'intérieur dudit bac de réception.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle d'une installation de dépolissage de récipient en verre conforme à l'invention ; et,
- la Figure 2 est un organigramme des différentes étapes du procédé de dépolissage selon l'invention.

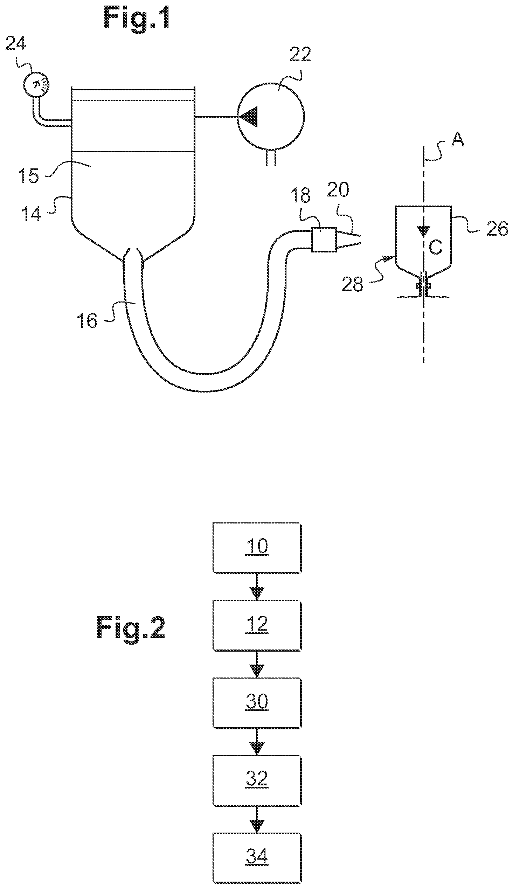

On détaillera en référence à la Figure 2 les différentes étapes du procédé de dépolissage de récipient en verre conforme à l'invention.

Dans une première étape 10 on fournit, pour une campagne de dépolissage, une pluralité de récipient en verre que l'on vient ajuster sur des supports. Les récipients en verre, sont par exemple des flacons destinés à la parfumerie. Les flacons comprennent une paroi présentant une surface externe et ils se terminent par un col apte à recevoir un dispositif de bouchage. Les supports sont avantageusement installés sur une chaîne de convoyage, et ils permettent de recevoir les flacons de manière à les maintenir tout en obturant leur col.

Les supports sont non seulement entraînés en translation sur la chaîne de convoyage, mais au surplus, ils sont susceptible d'être entraînés en rotation pour pouvoir entraîner également les flacons en rotation autour de l'axe du col. On décrira plus en détail dans la description qui va suivre, l'intérêt d'entraîner en double mouvement les flacons.

Selon une deuxième étape 12 on vient traiter mécaniquement la surface externe des flacons de manière à réaliser des aspérités microscopiques. Pour ce faire, on projette une composition minérale pulvérulente abrasive contre la surface externe des flacons au moyen d'une installation de dépolissage telle que représentée partiellement sur la Figure 1.

Cette installation de dépolissage comporte un réservoir étanche à l'air 14. Celui-ci est prolongé dans sa partie inférieure par une conduite 16 terminée par un embout 18 équipé d'une buse d'éjection 20. L'embout 18 est par exemple équipé d'un clapet d'arrêt non représenté ici. Le réservoir étanche 14 est rempli d'une composition minérale pulvérulente abrasive 15 et il est mis sous pression d'air grâce à un compresseur 22. Un manomètre 24 mesure la pression interne du réservoir 14. Par exemple, la pression est portée à une valeur comprise entre 1,2 et 1,6 bars ce qui correspond à une basse pression.

Avant de décrire le mode d'application de la composition minérale pulvérulente abrasive 15 sur un flacon 26 tel que décrit ci-dessus, on en décrira tout d'abord la nature.

Ainsi, la composition minérale pulvérulente abrasive 15 comprend essentiellement l'espèce minérale de formule chimique Fe₃Al₂(SiO₄)₃, plus couramment dénommée almandin. En faisant apparaître le caractère ionique des différents éléments de l'espèce minérale, la formule chimique s'écrit : Fe²⁺₃Al³⁺₂(SiO₄⁴⁻)₃. Cette espèce minérale appartient au groupe des nésosilicates, cristallisant dans le système cristallin cubique. Elle présente une grande dureté comprise entre 7,5 et 8 sur l'échelle Mohs, et sa densité apparente est de 2,4. De plus, elle est dépourvue de métaux toxiques et de silice cristalline.

La roche mère est extraite du sous-sol, par exemple du sous-sol australien, et elle est ensuite concassée et transformée afin d'obtenir une composition minérale pulvérulente dont la granulométrie est avantageusement comprise entre 30 µm et 60 µm. D'autres granulométries de composition minérale sont bien évidemment envisageables, par exemple entre 200 µm et 100 µm ou encore entre 425 µm et 180 µm.

Ainsi, la composition minérale pulvérulente abrasive 15 est mélangée à l'air comprimé à l'intérieur du réservoir 14 et lorsque le clapet d'arrêt de l'embout 18 est en position ouverte, le mélange d'air et de particules abrasives s'échappent à travers la buse d'éjection 20 pour venir frapper à une vitesse déterminée la surface externe 28 du flacon 26.

Selon un mode de mise en œuvre de l'invention particulièrement avantageux, l'embout 18 est entraîné en mouvement dans un plan contenant l'axe A du col du flacon 26 autour d'un point C de l'axe A situé sensiblement au centre du flacon 26. Ce mouvement s'effectue par exemple sur une amplitude totale de 2/3π, entre +π/3 et -π/3 autour de l'horizontale, tandis que la buse 20 demeure orientée vers le point C au centre du flacon 26. Après chaque mouvement de l'embout 18 d'une amplitude de 2π/3, soit du bas vers le haut ou du haut vers le bas, le flacon 26 est entraîné en rotation d'un pas de rotation autour de son axe de symétrie A sensiblement verticale, par exemple de π/4, de manière à pouvoir couvrir toute la surface externe 28 du flacon 26.

Ainsi, les particules de la composition minérale abrasive viennent percuter la surface externe 28 du flacon 26 à une vitesse moyenne déterminée en fonction de la pression d'air comprimé qui règne à l'intérieur du réservoir 14, et l'impact de la percussion provoque des aspérités de l'ordre du micromètre. La multitude d'aspérités confère à la paroi de verre son caractère translucide.

Toute autre mode de mise en œuvre de l'invention, concernant le mouvement de l'embout 18 peut être envisagé. Il est notamment prévu la mise en mouvement de l'embout 18 en translation parallèlement à l'axe A du flacon en conservant une inclinaison moyenne de la buse avec la surface du flacon d'un angle voisin de 45°. Après chaque mouvement de l'embout, le flacon est également entraîné en rotation d'un pas autour de son axe de symétrie A.

Ce mode de mise en œuvre est particulièrement adapté lorsque les flacons sont de symétrie sensiblement cylindrique. D'autres modes de mise en œuvre de l'embout 18 seraient envisagés pour pouvoir appliquer la composition minérale pulvérulente abrasive uniformément sur la surface de flacon d'une autre symétrie.

De plus, les flacons 26 sont ici traités séquentiellement, car la chaîne de convoyage est à l'arrêt durant l'application, tandis que le support est séquentiellement entraîné en rotation.

Après que la surface externe 28 du flacon 26 a été entièrement traitée, la chaîne de convoyage est entraînée d'un pas de translation de manière à présenter le flacon suivant au regard de la buse d'éjection 20 de l'embout 18.

De la sorte, une pluralité de flacon être traitée séquentiellement sur la chaîne de convoyage.

En revenant à la Figure 2, après la deuxième étape 12 de traitement mécanique de la surface externe des flacons, ceux-ci connaissent avantageusement une troisième étape 30 visant à immerger séquentiellement les flacons dans un bain d'acide chlorhydrique et d'acide fluorhydrique. Ainsi, un bac adapté est ménagé sous la chaîne de convoyage en aval de l'installation de dépolissage. Ce bac est rempli d'acide chlorhydrique à 33 % auquel est ajouté de l'acide fluorhydrique à 70 % à hauteur de 12,5 % en volume par rapport à l'acide chlorhydrique. La chaîne de convoyage provoque alors, dans une première phase, le retournement du support de flacon dans un sens à mesure de son avancement et l'entraînement du flacon en immersion dans le bain d'acide contenu dans le bac, puis, dans une seconde phase, le retour du flacon dans le sens opposé pour le retirer du bain acide.

L'acide chlorhydrique permet de dissoudre les graisses et les résidus de la surface externe de la paroi du flacon, tandis que l'acide fluorhydrique vient dissoudre partiellement la surface externe du verre. Ainsi, l'acide fluorhydrique permet de conférer un aspect satiné à la surface dépolie du verre. Elle lui confère également une sensation de douceur au toucher.

Après la sortie du bac acide, les flacons sont rincés conformément à une quatrième étape 32. Aussi, les flacons guidés sur la chaîne de convoyage, traversent ensuite une station de rinçage, dans laquelle ils sont aspergés d'eau courante.

Enfin, selon une cinquième étape 34, les flacons sont immergés séquentiellement dans un bac d'eau déminéralisée. Pour ce faire, en aval de la station de rinçage, un bac d'eau déminéralisée est installé sous la chaîne de convoyage, et tout comme pour le bac acide, la chaîne de convoyage provoque tout d'abord le retournement du support de flacon dans un sens à mesure de l'avancement de la chaîne pour entraîner le flacon en immersion dans le bac d'eau déminéralisée puis ensuite le redresser à l'inverse pour le retirer du bac d'eau déminéralisée.

La chaîne de convoyage peut ensuite, avantageusement traverser un séchoir de manière à sécher les flacons dépolis.

On observera que la troisième étape 30 est préférentiellement mise en œuvre, mais que dans certaines circonstances, elle peut ne pas être mise en œuvre. Il en est également ainsi de la cinquième étape 34.

Dans une ultime étape, les flacons sont désolidarisés de leur support pour être stockés en vue d'un remplissage ultérieur.

## Revendications

1. Procédé de dépolissage de récipient en verre du type comprenant les étapes suivantes :
- a) on fournit un récipient en verre (26) comprenant une paroi, ladite paroi présentant une surface externe (28) ;
- b) on traite ladite surface externe (28) de manière à réaliser des aspérités microscopiques ; et,
- c) on débarrasse la surface externe traitée des résidus de traitement de ladite surface externe ;
**caractérisé en ce qu'**à l'étape b) on projette une composition minérale pulvérulente abrasive (15) contre ladite surface externe (28) de manière à réaliser mécaniquement lesdites aspérités ;
et **en ce que** ladite composition minérale pulvérulente abrasive (15) comprend essentiellement une espèce minérale de formule chimique générale : X²⁺₃Y³⁺₂(SiO₄⁴⁻)₃, dans laquelle X est choisi parmi les éléments de l'ensemble des premiers éléments comprenant Ca, Fe, Mg et Mn, et dans laquelle Y est choisi parmi les éléments de l'ensemble des seconds éléments comprenant Al, Fe et Cr.

2. Procédé de dépolissage selon la revendication 1, **caractérisé en ce que** X est Fe et Y est Al.

3. Procédé de dépolissage selon la revendication 1 ou 2, **caractérisé en ce qu'**il comprend en outre une étape intermédiaire b') entre l'étape b) et l'étape c), selon laquelle on immerge ledit récipient en verre (26) dans un bain d'acide chlorhydrique et d'acide fluorhydrique.

4. Procédé de dépolissage selon l'une quelconque des revendications 1 à 3, **caractérisé en ce qu'**à l'étape c), on immerge ledit récipient dans un bain d'eau déminéralisée.

5. Procédé de dépolissage selon l'une quelconque des revendications 1 à 4, **caractérisé en ce qu'**à l'étape b), on porte ladite composition minérale pulvérulente abrasive (15) à l'intérieur d'air comprimé à basse pression pour pouvoir projeter ladite composition minérale pulvérulente abrasive.

6. Installation de dépolissage de récipient en verre (26) comprenant une paroi, ladite paroi présentant une surface externe (28), ladite installation comprenant, d'une part des premiers dispositifs de traitement pour pouvoir traiter ladite surface externe (28) de manière à réaliser des aspérités microscopiques, et d'autre part des deuxièmes dispositifs de traitement pour pouvoir débarrasser la surface externe traitée des résidus de traitement de ladite surface externe ;
**caractérisée en ce que** lesdits premiers dispositifs de traitement comprennent un réservoir (14) d'une composition minérale pulvérulente abrasive (15) et un organe de projection (18, 20) relié audit réservoir, pour pouvoir projeter ladite composition minérale pulvérulente abrasive (15) contre ladite surface externe (28) de manière à réaliser mécaniquement lesdites aspérités ;
et **en ce que** ladite composition minérale pulvérulente abrasive (15) comprend essentiellement une espèce minérale de formule chimique générale : X²⁺₃Y³⁺₂(SiO₄⁴⁻)₃, dans laquelle X est choisi parmi les éléments de l'ensemble des premiers éléments comprenant Ca, Fe, Mg et Mn, et dans laquelle Y est choisi parmi les éléments de l'ensemble des seconds éléments comprenant Al, Fe et Cr.

7. Installation de dépolissage selon la revendication 6, **caractérisée en ce qu'**elle comprend en outre un bac de réception d'acide chlorhydrique et d'acide fluorhydrique pour pouvoir immerger ledit récipient en verre à l'intérieur dudit bac de réception.

## Patentansprüche

1. Verfahren zum Aufrauhen bzw. Mattieren eines Glasbehälters dieser Art, umfassend die folgenden Schritte:
- a) Bereitstellen eines Glasbehälters (26), der eine Wand umfasst, wobei die Wand eine äußere Oberfläche (28) aufweist;
- b) die äußere Oberfläche (28) wird behandelt, um mikroskopische Rauhigkeiten zu erzeugen; und,
- c) die behandelte äußere Oberfläche wird von Behandlungsrückständen von der Äußere Oberfläche befreit;
**dadurch gekennzeichnet, dass** in Schritt b) eine abrasive pulverförmige Mineralzusammensetzung (15) gegen die äußere Oberfläche (28) ausgeschleudert wird, um die Rauheit mechanisch zu erzeugen;
und dass die abrasive pulverförmige Mineralzusammensetzung (15) im Wesentlichen eine Mineralart der allgemeinen chemischen Formel enthält: X²⁺₃Y³⁺₂(SiO₄⁴⁻)₃, in der X aus den Elementen der Menge der ersten Elemente, die Ca, Fe, Mg und Mn umfassen, ausgewählt ist und in denen Y aus den Elementen der Menge der zweiten Elemente, die Al, Fe und Cr umfassen, ausgewählt ist.

2. Verfahren zum Mattieren nach Anspruch 1, **dadurch gekennzeichnet, dass** X Fe und Y AI ist.

3. Verfahren zum Mattieren nach Anspruch 1 oder 2, **dadurch gekennzeichnet, dass** es weiter einen Zwischenschritt b') zwischen dem Schritt b) und Schritt c) umfasst, worin der Glasbehälter (26) in ein Bad aus Salzsäure und saurer Flusssäure getaucht wird.

4. Verfahren zum Mattieren nach einem der Ansprüche 1 bis 3, **dadurch gekennzeichnet, dass** in Schritt c) der Behälter in ein Bad aus demineralisiertem Wasser getaucht wird.

5. Verfahren zum Mattieren nach einem der Ansprüche 1 bis 4, **dadurch gekennzeichnet, dass** in dem Schritt b) die abrasive pulverförmige Mineralzusammensetzung (15) in Niederdruckdruckluft gebracht wird, um die pulverförmige Mineralzusammensetzung ausschleudern zu können.

6. Anlage zum Aufrauhen bzw. Mattieren eines Glasbehälters (26) mit einer Wand, wobei die Wand eine äußere Oberfläche (28) aufweist, wobei die Anlage einerseits erste Behandlungsvorrichtungen umfasst, um die äußere Oberfläche (28) so behandeln zu können, dass sie mikroskopische Rauhigkeiten erzeugt, und andererseits zweite Behandlungsvorrichtungen umfasst, um die behandelte äußere Oberfläche von Behandlungsresten von der äußeren Oberfläche befreien zu können;
**dadurch gekennzeichnet, dass** die ersten Behandlungsvorrichtungen ein Reservoir (14) einer abrasiven pulverförmigen Mineralzusammensetzung (15) und ein mit dem Reservoir verbundenes Projektionselement (18, 20) umfassen, um die abrasive pulverförmige Mineralzusammensetzung (15)) gegen die äußere Oberfläche (28) ausschleudern zu können, um die Rauhigkeiten mechanisch zu erzeugen;
und dass die abrasive pulverförmige Mineralzusammensetzung (15) im Wesentlichen eine Mineralart der allgemeinen chemischen Formel enthält: X²⁺₃Y³⁺₂(SiO₄⁴⁻)₃, in der X aus den Elementen der Menge der ersten Elemente, die Ca, Fe, Mg und Mn umfassen, ausgewählt ist und in denen Y aus den Elementen der Menge der zweiten Elemente, die Al, Fe und Cr umfassen, ausgewählt ist.

7. Anlage zum Mattieren nach Anspruch 6, **dadurch gekennzeichnet, dass** sie weiter einen Aufnahmetank für Salzsäure und Flusssäure umfasst, um den Glasbehälter in den Aufnahmetank eintauchen zu können.

## Claims

1. A method for frosting a glass container of the type comprising the following steps of :
a) providing a glass container (26) comprising a wall, said wall having an external surface (28) ;
b) treating said external surface (28) so as to form microscopic asperities ; and
c) removing, from the treated external surface, of the treatment residues of said external surface ;
**characterized in that** at the step b) an abrasive pulverulent mineral composition (15) is projected against said external surface (28) so as to mechanically form said asperities ;
and **in that** said abrasive pulverulent mineral composition (15) comprises substantially a mineral species of the general chemical formula :
X²⁺₃Y³⁺₂(SiO₄⁴⁻)₃, in which X is selected among the elements of the whole of the first elements comprising Ca, Fe, Mg and Mn, and in which Y is selected among the elements of the whole of the second elements comprising Al, Fe and Cr.

2. The frosting method according to claim 1, **characterized in that** X is Fe and Y is Al.

3. The frosting method according to claim 1 or 2, **characterized in that** it further comprises an intermediate step b') between step b) and step c) according to which said glass container (26) is immersed into a bath of hydrochloric acid and hydrofluoric acid.

4. The frosting method according to any of claims 1 to 3, **characterized in that** at the step c), said container is immersed into a bath of demineralized water.

5. The frosting method according to any of claims 1 to 4, **characterized in that** at the step b), said abrasive pulverulent mineral composition (15) is driven into low pressure compressed air to be able to project said abrasive pulverulent mineral composition.

6. An installation for frosting a glass container (26) comprising a wall, said wall having an external surface (28), said installation comprising, on the one hand, first treating devices intended to treat said external surface (28) so as to form microscopic asperities and, on the other hand, second treating devices intended to remove, from the external treated surface, the treating residues of said external surface ;
**characterized in that** said first treating devices comprise a tank (14) of an abrasive pulverulent mineral composition (15) and a projecting member (18, 20) connected to said tank, to be able to project said abrasive pulverulent mineral composition (15) against said external surface (28) so as to mechanically form said asperities ;
and **in that** said abrasive pulverulent mineral composition (15) comprises substantially a mineral species of the general chemical formula :
X²⁺₃Y³⁺₂(SiO₄⁴⁻)₃, in which X is selected among the elements of the whole of the first elements comprising Ca, Fe, Mg and Mn, and in which Y is selected among the elements of the whole of the second elements comprising Al, Fe and Cr.

7. The frosting installation according to claim 6, **characterized in that** it further comprises a vat for receiving hydrochloric acid and hydrofluoric acid in order to immerse said glass container within said receiving vat.
